# EUROPEAN PATENT APPLICATION

(11) **EP 3 552 503 A1**
(43) Date of publication of application: **16.10.2019**
(21) Application number: 18178120.4
(22) Date of filing: 15.06.2018
(51) Int. Cl.: A24F 47/00, G05D 23/19, F24H 3/04

(54) **A TEMPERATURE INTELLIGENT CONTROL SYSTEM OF AN ELECTRONIC HEATING DEVICE AND CONTROL METHOD THEREOF**

(30) Priority: 13.04.2018 CN 201810331901
(71) Applicant: Shenzhen Hangsen Star Technology Co., Ltd., Shenzhen, Guangdong 518112 (CN)
(72) Inventor: YAO, Haofeng, Shenzhen, Guangdong 518112 (CN); ZHANG, Shipeng, Shenzhen, Guangdong 518112 (CN); MA, Fangshuo, Shenzhen, Guangdong 518112 (CN)
(74) Representative: Poskett, Oliver James

(57) **Abstract**

The invention relates to a temperature intelligent control system of an electronic heating device and a control method thereof. The system comprises a control unit, an airflow collection unit and a heating unit. The airflow acquisition unit is used for collecting air passing through the electronic heating device when the user inhales the air, and converts the airflow into the voltage difference, and the voltage difference is amplified and sent to the control unit; the control unit is used for receiving the amplified voltage difference, and according to the voltage difference, outputs the control signal to the heating unit; the heating unit is used for receiving the control signal and according to the control. The signal adjusts the heating rate.

## Description

### Technical Field

The invention relates to the electronic heating device manufacturing field, especially for a temperature intelligent control system of an electronic heating device and control method thereof.

### Background Art

With the improvement of the people's living standards, they gradually realized the harm of smoking on the human body, and thus created electronic cigarettes. The low-temperature non-combustible baking appliance, i.e., the electronic heating device, is a new type of cigarette smoking device, which is popular because the working temperature is far less than the temperature of direct burning of the cigarette.

The existing low-temperature non-combustible baking device uses thermostatically controlled heating tube or heating wire. The microprocessor detects the operating temperature of the heating tube or heating wire in the process; if the temperature of the heating tube or heating wire decreases during the work process, the heating tube will increase. The power of the heating wire makes it constant, and when the user smokes the cigarette using the device, the generated cigarette airflow will take away some of the heat. However, when the user's suction power is inconsistent, the amount of airflow of the user is not recognized, and the amount of heat absorbed is also inconsistent, resulting in inconsistent smoking effects. The current heating rate does not reach the temperature taken by the air, the smoke taste will be worse.

Therefore, it is necessary to design a new temperature intelligent control system to achieve the user's inhalation size, adjust the heating rate according to the size of inhalation, and intelligently control the temperature.

### Summary of the Invention

The invention relates to a temperature intelligent control system of an electronic heating device and a control method thereof. The system comprises a control unit, an airflow collection unit and a heating unit. The airflow acquisition unit is used for collecting air passing through the electronic heating device when the user inhales the air, and converts the airflow into the voltage difference, and the voltage difference is amplified and sent to the control unit; The control unit is used for receiving the amplified voltage difference, and according to the voltage difference, outputs the control signal to the heating unit; The heating unit is used for receiving the control signal and according to the control The signal adjusts the heating rate. In the present invention, the airflow collection unit is provided to collect the airflow through the electronic heating device when the user inhales the air, converts the airflow into a voltage difference, and then the voltage difference is amplified and then sent to the control unit. The control unit adjusts the heating rate of the heating unit to achieve the user acquisition, and the control unit will control the heating temperature of the heating conductor 4 according to the size of the inhalation, and ensures the bake effect of the cigarette, and give the user a better taste.

Based on the above defects, the purpose of the invention is to provide a temperature intelligent control system of electronic heating device and control method thereof.

A temperature intelligent control system of an electronic heating device comprises a control unit, an airflow collection unit, and a heating unit, wherein:
the airflow collection unit is configured to collect the air passing through the electronic heating device when the user inhales the air, and is configured to convert the airflow to a voltage difference, and is further configured such that after the voltage difference is amplified, the airflow collection unit transmits the amplified voltage difference to the control unit;
the control unit is configured to receive the amplified voltage difference, and according to the voltage difference, the control unit outputs the control signal to the heating unit; and
the heating unit is configured to receive the control signal, and according to the control signal, the heating unit adjusts the heating rate of the heating unit.

Its further technical solution is that the airflow collection unit comprises an airflow sensor U2 and a signal amplification module, wherein:
the airflow sensor U2 is configured to collect the air passing through the electronic heating device when the user inhales and is configured to convert the airflow into a voltage difference; and
the signal amplification module is configured to transmit the amplified voltage difference to the control unit.

Its further technical solution is that the signal amplifying module comprises an amplifying chip U5 and an amplification matching resistor R; wherein the amplification matching resistor R comprises a first amplification matching resistor R11, a second amplification matching resistor R12, and a third amplification matching resistor R13.

Its further technical solution is that the control unit comprises a control chip U4.

Its further technical solution is that the heating unit comprises a heating drive module and a detecting module, wherein:
the heating drive module is configured to receive a control signal and drive an external heating conductor to heat; and
the detection module is configured to obtain the current and the voltage of the heating drive module during work and feedback the signal to the control unit to adjust the heating temperature of the heating drive module.

Its further technical solution is that the heating drive module comprises a driving chip Q1 and a switching element Q2; wherein according to the received control signal, the switching element Q2 is configured to control the driving chip Q1 by turning on or off, and then the detection module comprises a current sampling chip U1.

Its further technical solution is that the temperature intelligent control system comprises a charging unit, and according to an external power source the charging unit is configured to charge the power supply units connected with it.

Its further technical solution is that the temperature intelligent control system comprises a display unit, and the display unit is configured to display the current state of the electric heating device under the control of the control unit.

Its further technical solution is that the temperature intelligent control system comprises a switch unit, and the switch unit is configured to turn on or off the electric heating device to form an input signal of the control unit.

The invention also provides the temperature intelligent control method using the electronic heating device, comprises:
the airflow collection unit collecting the air passing through the electronic heating device when the user inhales and converting the airflow to a voltage difference and amplifying the voltage difference;
the airflow collection unit transmitting the amplified voltage difference to the control unit;
when the control unit receives the amplified voltage difference, according to the voltage difference the control unit then outputting the control signal to the heating unit; and
the heating unit receiving the control signal, and according to the control signal, the heating unit then adjusting the heating rate of the heating unit.

The beneficial effect of the present invention, as the following:
The temperature intelligent control system of the electronic heating device is provided in the present invention, the airflow collection unit is used to collect the airflow heated by the electronic heating device when the user inhales the air, and the airflow will be converted to the voltage difference, and the voltage difference is amplified and then transmitted to the control unit, and the control unit will adjust the heating rate of the heating unit, so that to collect the user's inhalation size, and according to the size of inhalation to adjust the heating rate, intelligent control of temperature, to ensure the effect of cigarette baked by the electronic heating device, and giving the user a better taste.

### Description of Drawings

FIG.1 is the structural block diagram of the temperature intelligent control system of the electronic heating device for an embodiment.
FIG.2 is the circuit schematic of the airflow collection unit for an embodiment.
FIG.3 is the circuit schematic of the control unit for an embodiment.
FIG.4 is the circuit schematic of the heating unit for an embodiment.
FIG.5 is the circuit schematic of the charging unit for an embodiment;
FIG.6 is the circuit schematic of the display unit for an embodiment.

### Detailed Description of the Invention

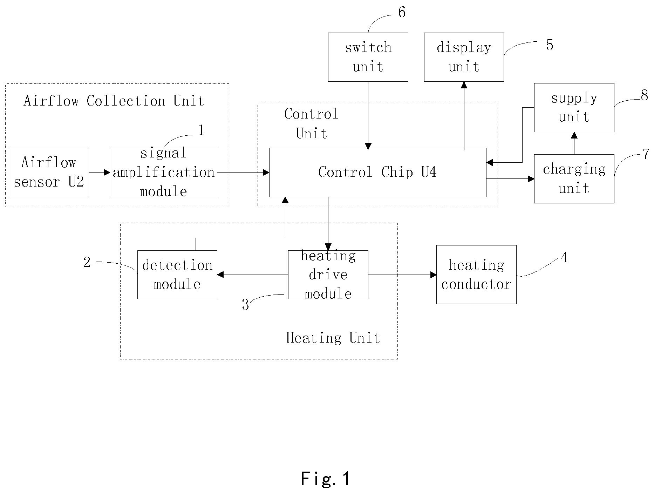

As shown in Fig.1 to Fig.6, The temperature intelligent control system of the electronic heating device provided by this embodiment can be used in an electronic heating device with relatively low temperature and non-combustible baking tobacco or cigarette , and the system is used to achieve the size of the user's inhalation, and according to the size of the inhalation, the system can adjust the heating rate and intelligently control the temperature.

As shown in Fig.1, in this embodiment, a temperature intelligent control system of an electronic heating device comprises a control unit, an airflow collection unit, and a heating unit, wherein:
the airflow collection unit is configured to collect the air passing through the electronic heating device when the user inhales the air, and is configured to convert the airflow to voltage difference, and is further configured such that after the voltage difference is amplified, the airflow collection unit transmits the amplified voltage difference t to the control unit.
the control unit is configured to receive the amplified voltage difference, and according to the voltage difference, the control unit outputs the control signal to the heating unit; and
the heating unit is configured to receive the control signal, and according to the control signal, the heating unit adjusts the heating rate of the heating unit.

Further, the airflow collection unit comprises an airflow sensor U2 and a signal amplification module 1, wherein:
the airflow sensor U2 is configured to collect the air passing through the electronic heating device when the user inhales and is configured to convert the airflow into a voltage difference; and
the signal amplification module is configured to transmit the amplified voltage difference to the control unit.

One key parameter of the electric heating device is to maintain the constant temperature. The airflow sensor U2 is used to detect the user's inhalation size. The airflow sensor U2 collects the changed airflow, and amplifies the changed airflow in a voltage difference manner, then the airflow sensor U2 transmits the voltage difference to the control unit for identification. When the airflow is large, it show that the heat of the heating conductor 4 (such as a heating wire or a heat pipe) is rapidly lost, and the control unit of the electric heating device will increase the power to increase the temperature quickly, so as to guarantee the tobacco gas effect that come from the cigarette baked by the electric healing device, and give the user the best taste.

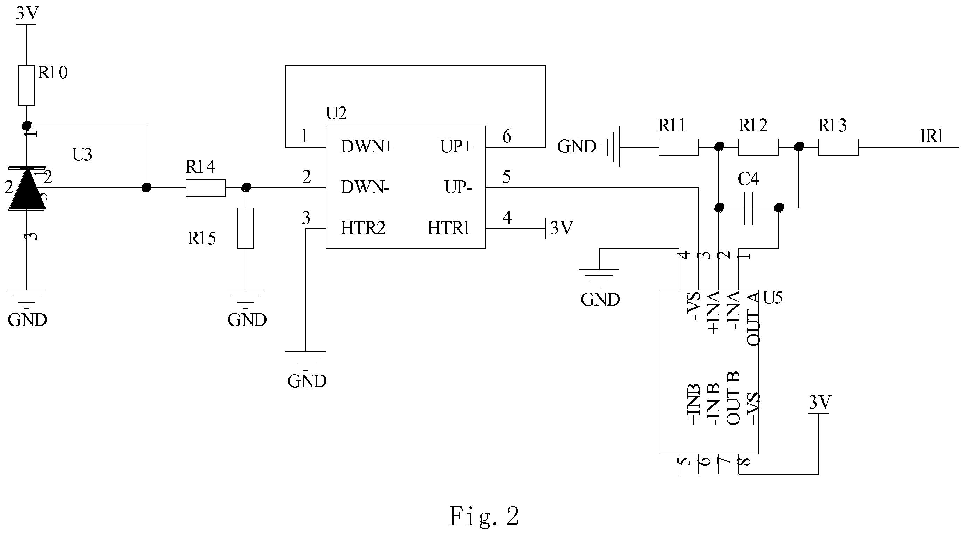

Other, as shown in Fig.2, the signal amplifying module 1 comprises an amplifying chip U5 and an amplification matching resistor R. In this embodiment, the amplification matching resistor R comprises a first amplification matching resistor R11, a second amplification matching resistor R12, and a third amplification matching resistor R13, which are sequentially connected in series.

The output signal pin (OUTA pin) and the inverted signal pin (-INA pin) of the amplifying chip U5 is respectively connected in parallel across the two ends of the second amplification matching resistor R12, and the other end of the first amplification matching resistor R11 is grounded; the other end of the third amplification matching resistor R13 is connected to the control chip U4.

The signal amplifying module 1 further comprises a filter capacitor C4. Both ends of the filter capacitor C4 are respectively connected to the inverted signal pin (-INA pin) and the output signal pin (OUTA pin) of the amplifying chip U5 to form an amplifying circuit.

The first pull-down resistor R15 is connected with one end of the current limiting resistor R14, and the connection point thereof is connected with the DWN-pin of the airflow sensor U2; the other end of the first pull-down resistor R15 is grounded; the other end of the current limiting resistor R14 are connected with the control pin of the three terminal U3; The negative pin of the three-terminal voltage regulation chip U3 is connected to the 3V working voltage through the resistor R10; the positive pin of the three-terminal voltage regulation chip U3 is grounded.

The type of the three-terminal voltage regulation chip U3 is a TL431. The three-terminal voltage regulation chip U3 stably outputs a voltage of 2.5V, which is then divided into voltage by the current limiting resistor R14 and the first pull-down resistor R15, and is then outputted to the airflow sensor U2.

When the air passes through the airflow sensor U2, a difference in air pressure is generated within the airflow sensor U2, and a level signal is generated at the UP-pin of the airflow sensor U2. The level signal is amplified when it passes through the amplifying chip U5, and the amplified signal is transmitted to the control chip U4 via the detection pin IR1.

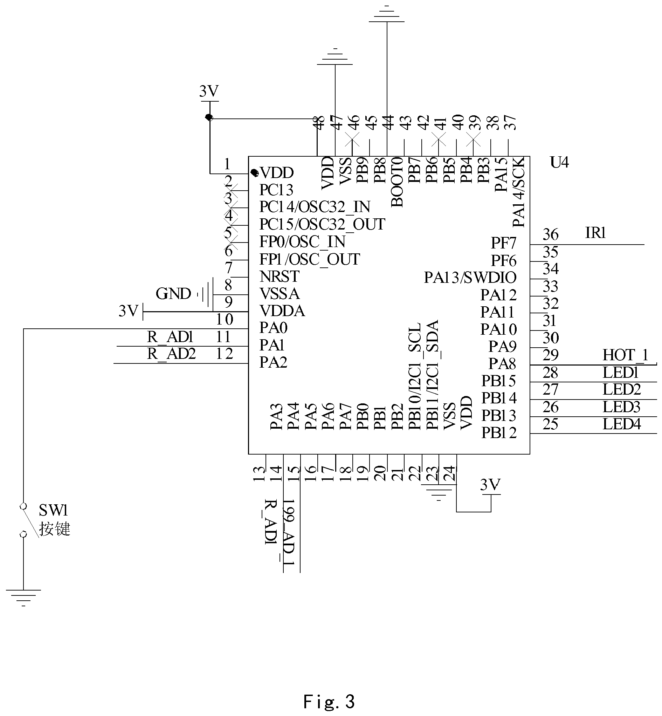

Specifically, as shown in Fig.2 and Fig.3, the detection pin IR1 of the airflow signal amplification module 1 is connected to the PF7 pin (36th pin) of the control chip U4.

Further, the above-mentioned heating unit comprises a heating drive module 3 and a detection module 2. The heating drive module 3 is configured to receive a control signal and drive an external heating conductor 4 to heat; and the detection module 2 is configured to obtain the current and the voltage of the heating drive module 3 during operation and feedback the signal to the control chip U4 to adjust the heating temperature of the heating drive module 3.

In this embodiment, the heating conductor 4 is a heating wire. In other embodiments, the heating conductor 4 is a combination of a heating wire and a heating tube.

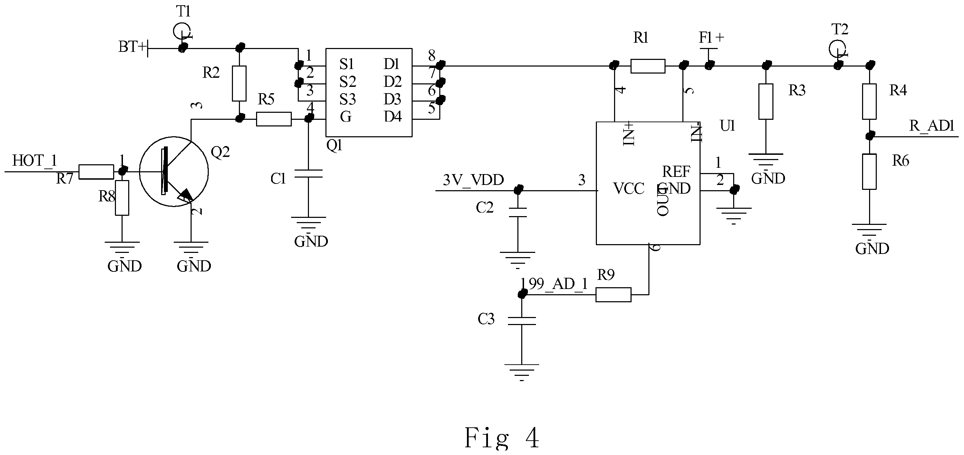

As shown in Fig.4, The above-mentioned heating drive module 3 comprises a driving chip Q1 and a switching element Q2. The type of the driving chip Q1 is a P-MOS transistor. The G pin of the driving chip Q1 is connected with a switching element Q2, and the turning on or off of the switching element Q2 is configured to control the driving chip Q1 to turn on or off, so as to control the heating or closing of the heating conductor 4.

Specifically, the above-mentioned switching element Q2 is a transistor or MOS transistor of PNP model. The heating drive module 3 comprises a pull-up resistor R2 and a first current limiting resistor R5. One end of the pull-up resistor R2 is connected to BT+ and the other end is connected to the input pin (S-pin) of switching element Q2. The both ends of the first current limiting resistor R5 are respectively connected to the control pin (G-pin) of the driver chip Q1 and the input pin (S-pin) of switching element Q2.

The detection module 2 comprises a sampling resistor R1. The end of the sampling resistor R1 is connected to the output pin (i.e., D-pole) of the driver chip Q1 and the other end is connected to the heating conductor 4.

According to the characteristics of the P-MOS transistor, when the voltage Vgs between the gate and the source is smaller than a certain value, that is 0.8v to 2.0v, the driving chip Q1 will be turned on, and vice versa will be turned off.

As shown in FIG. 4, when HOT_1 outputs a low level, the switching element Q2 is turned off, and the control pin (G pin) of the driving chip Q1 is at a high level, that is, the conduction between the input pin (S pole) and the output pin (D pin) of the driving chip Q1 is turned off; and the driving chip Q1 to stop the work, the driving chip Q1 does not provide the working current to the heating conductor. The heating conductor 4 does not work. When the HOT_1 is high level, the switching element Q2 is turned on, and the control pin (G pin) of the driving chip Q1 is low level, that is, The input (S pin) and the output (D pin) of the driving chip Q1 are turned on, and the driving chip Q1 provides working current to the heating conductor, and the heating conductor 4 operates.

As shown in Fig.3, The HOT_1 control signal is output from the control chip U1 of the control unit.

As shown in Fig.4, in addition, the detection module 2 comprises a current sampling chip U1, and the sampling resistor R1 is a current sampling resistor. The current flowing through the heating conductor 4 is equal to the current flowing through the sampling resistor R1. When the current flows through the sampling resistor R1, and then the voltage is generated at both ends of the sampling resistor R1. Because the resistance of the sampling resistor R1 is relatively small, the voltage across the sampling resistor R1 is also relatively small, and after the voltage is amplified by the current amplifier several times, it is converted into a suitable AD sampling voltage, which is collected by the PA4 pin of the control chip U4.The current sampling resistor requires a small resistance and the accuracy is controlled at 1%.

In addition, Further, the detection module 2 comprises a first divider voltage resistor R4 and a second divider voltage resistor R6. The detection module 2 collects the voltage of the heating conductor 4 by the first divider voltage resistor R4 and the second divider voltage resistor R6, and the voltage is provided to the control chip U4.

The number of the above heating units may be one, two or three; in other embodiments, the number of the above heating units is four or more, and the heating unit is arranged around the tobacco so as to uniformly heat the tobacco, and the release of cigarette smoke is more uniform.

Specifically, the above-mentioned control chip U4 has a PWM output port. According to the size of the airflow, the mentioned control chip U4 can adjust the PWM duty cycle, thereby adjusts the heating curve of the heating conductor 4.

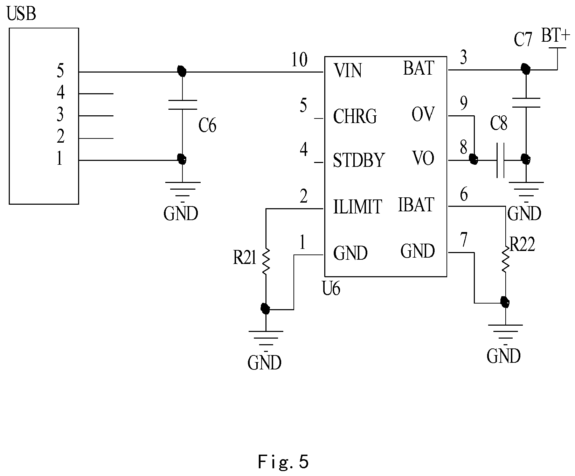

As shown in Fig.1 and Fig. 5 , in other embodiments, the temperature intelligent control system comprises a charging unit 7,which is configured to charge for the power supply unit 8 connected to it thereto according to external power inputted; and the power supply unit 8 is configured to provide a power for the control unit. In this embodiment, the power supply unit 8 is a combination of a battery, and is configured to provide energy for the operation of the electric heating device.

The charging unit 7 comprises a charging management chip U6 and a USB interface connected to the charging management chip U6. The type of the charging management chip U6 is LP28021.

In addition, in other embodiments, the above-mentioned temperature intelligent control system further comprises a display unit 5 configured to display the current state of the electric heating device under the control of the control unit.

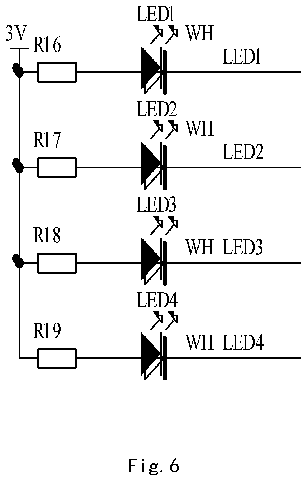

In this embodiment, as shown in Fig. land Fig.6, the above-mentioned display unit 5 is a plurality of LED lamps connected in parallel; in other embodiments, the above-mentioned display unit 5 may also be a display screen.

In other embodiments, the above-mentioned temperature intelligent control system further comprises a switch unit 6, which is configured to turn on or off the electric heating device to form an input signal of the control unit.

As shown in FIG. 3, the above-described switch unit 6 is a button SW1. In other embodiments, the above-mentioned switch unit 6 may also be other single-pole switches or the like.

After the electric heating device is turned on by pressing the button SW1. When the heating is started, and after the preset temperature of the heating conductor 4 is reached, the temperature of the heating conductor 4 will be configured to feedback and adjust the output power to reach the constant a temperature effect. At the same time, the change of airflow can generate some different voltage signals. After these voltage signals are amplified, and the control chip U4 of the electric heating device outputs controlling signal to control the heating drive module 3 and to achieve the adjustment of the heating rate of heating unit.

The temperature intelligent control system of the electronic heating device is provided in the present invention, the airflow collection unit is used to collect the airflow heated by the electronic heating device when the user inhales the air, and the airflow will be converted to the voltage difference, and the voltage difference is amplified and then transmitted to the control unit, and the control unit will adjust the heating rate of the heating unit, so that to collect the user's inhalation size, and according to the size of inhalation to adjust the heating rate, intelligent control of temperature, to ensure the effect of cigarette baked by the electronic heating device, and giving the user a better taste.

The invention also provides the temperature intelligent control method of the electronic heating device, comprises:
the airflow collection unit collects the air passing through the electronic heating device when the user inhales and converts the airflow to a voltage difference and amplifies the voltage difference;
the airflow collection unit transmits the amplified voltage difference to the control unit;
when the control unit receives the amplified voltage difference, and according to the voltage difference the control unit then outputs the control signal to the heating unit; and
the heating unit receives the control signal and according to the control signal, the heating unit then adjusts the heating rate of the heating unit.

The above-mentioned temperature intelligent control method of the electronic heating device sets the airflow acquisition unit to collect the airflow passing through the electronic cigarette when the user inhales the air, converts the voltage difference, and then transmits the voltage difference to the control unit after being amplified. The control unit adjusts the temperature increasing rate of the heating unit, and to collect the inhalation size of the user, then the control unit will control the heating temperature of the heating conductor 4 according to the size of the inhalation, and ensures the bake effect of the cigarette, and give the user a better taste.

## Claims

1. A temperature intelligent control system of an electronic heating device comprising a control unit, an airflow collection unit, and a heating unit, wherein:
the airflow collection unit is configured to collect the air passing through the electronic heating device when the user inhales the air, and is configured to convert the airflow to a voltage difference, and is further configured such that after the voltage difference is amplified the airflow collection unit transmits the amplified voltage difference to the control unit;
the control unit is configured to receive the amplified voltage difference, and according to the voltage difference the control unit outputs the control signal to the heating unit; and
the heating unit is configured to receive the control signal, and according to the control signal the heating unit adjusts the heating rate of the heating unit.

2. The temperature intelligent control system of claim 1, wherein the airflow collection unit comprises an airflow sensor (U2) and a signal amplification module, wherein:
the airflow sensor (U2) is configured to collect the air passing through the electronic heating device when the user inhales and is configured to convert the airflow into a voltage difference; and
the signal amplification module is configured to transmit the amplified voltage difference to the control unit.

3. The temperature intelligent control system of claim 2, wherein the signal amplification module comprises an amplification chip (U5) and an amplification matching resistor (R); wherein
the amplification matching resistor (R) comprises a first amplification matching resistor (R11), a second amplification matching resistor (R12), and a third amplification matching resistor (R13).

4. The temperature intelligent control system of any one of claims 1, 2 or 3, wherein the control unit comprises a control chip (U4).

5. The temperature intelligent control system of claim 4, wherein the heating unit comprises a heating drive module and a detection module, wherein:
the heating drive module is configured to receive a control signal and is configured to drive an external heating conductor to heat; and
the detection module is configured to obtain the current and the voltage of the heating drive module during operation and is further configured to feedback the signal to the control unit to adjust the heating temperature of the heating drive module.

6. The temperature intelligent control system of claim 5, wherein the heating drive module comprises a driving chip (Q1) and a switching element (Q2); wherein,
according to the received control signal, the switching element (Q2) is configured to control the driving chip (Q1) by turning on or off, and the detection module comprises a current sampling chip (U1).

7. The temperature intelligent control system of claim 1, wherein the temperature intelligent control system comprises a charging unit, and according to an external power source the charging unit is configured to charge the power supply units connected with it.

8. The temperature intelligent control system of claim 1, wherein the temperature intelligent control system comprises a display unit, and the display unit is configured to display the current state of the electric heating device under the control of the control unit.

9. The temperature intelligent control system of claim 1, wherein the temperature intelligent control system comprises a switch unit, and the switch unit is configured to turn on or off the electric heating device to form an input signal of the control unit.

10. A temperature intelligent control method using the electronic heating device of any preceding claim, comprising:
the airflow collection unit collecting the air passing through the electronic heating device when the user inhales and converting the airflow to a voltage difference and amplifying the voltage difference;
the airflow collection unit transmitting the amplified voltage difference to the control unit; wherein
when the control unit receives the amplified voltage difference, according to the voltage difference the control unit then outputting the control signal to the heating unit; and
the heating unit receiving the control signal, and according to the control signal the heating unit then adjusting the heating rate of the heating unit.
